# EUROPÄISCHE PATENTSCHRIFT

(11) **EP 3 040 244 B1**
(45) Veröffentlichungstag und Bekanntmachung des Hinweises auf die Patenterteilung: **04.07.2018**
(21) Anmeldenummer: 16150134.1
(22) Anmeldetag: 05.01.2016
(51) Int. Cl.: B60R 11/04

(54) **BILDERFASSUNGSSYSTEM MIT FLEXIBLEM ÜBERTRAGUNGSELEMENT**
IMAGE ACQUISITION SYSTEM WITH FLEXIBLE TRANSMISSION ELEMENT
SYSTEME DE SAISIE D'IMAGES COMPRENANT UN ELEMENT DE TRANSMISSION FLEXIBLE

(30) Priorität: 05.01.2015 DE 102015100038
(43) Veröffentlichungstag der Anmeldung: 06.07.2016
(73) Patentinhaber: Huf Hülsbeck & Fürst GmbH & Co. KG, 42551 Velbert (DE)
(72) Erfinder: WIETKAMP, Stephan, 48161 Münster (DE)
(74) Vertreter: Bals, Rüdiger

(56) Entgegenhaltungen:
- EP-A1- 2 508 393
- DE-A1- 19 961 389
- DE-A1-102013 001 721

## Beschreibung

Die vorliegende Erfindung betrifft ein Bilderfassungssystem mit einer Kameraeinheit, zur Bilderfassung des Außenbereiches eines Kraftfahrzeuges gemäß dem Oberbegriff von Anspruch 1. Das Bilderfassungssystem ist dabei versehen mit einer Kameraeinheit, die zur Bilderfassung des Außenbereiches eines Kraftfahrzeuges dient, und einem Schutzelement, wobei zumindest die Kameraeinheit und/oder das Schutzelement über einen Mechanismus mittels eines Antriebs von zumindest einer Schließstellung in zumindest eine Offenstellung bewegbar sind, wobei sich in der Schließstellung des Schutzelementes zumindest eine Linse der Kameraeinheit von außen unzugänglich hinter dem Schutzelement befindet, und in der Offenstellung zumindest die Linse der Kameraeinheit durch das Schutzelement zur Bilderfassung freigegeben ist.

Es ist bekannt, dass Bilderfassungssysteme aus dem Stand der Technik mit einer Kameraeinheit ausgestattet sind, die über einen Antrieb von einer Schließstellung in eine Offenstellung und umgekehrt bewegt werden können. Darüber hinaus ist aus der DE 20 2013 105 314 U1 ein Kraftfahrzeugschloss bekannt, das eine Schlossmechanik aufweist, die mit einem Antrieb und einem flexiblen Zugmittel in die entsprechenden Funktionszustände bringbar ist.

EP 2 508 393 A1 offenbart ein Bilderfassungssystem gemäß dem Oberbegriff des Anspruchs 1. Nachteilhaft bei Bilderfassungssystemen der vorbenannten Art ist, dass das Bilderfassungssystem für den Einbau in ein Fahrzeug genügend Bauraum zur Verfügung stellen muss, damit der Antrieb für die Kameraeinheit derart angeordnet werden kann, dass eine Kraftübertragung von dem Antrieb zur Kameraeinheit über ein starres Übertragungselement hergestellt werden kann. Derartige Systeme sind sehr starr in ihrer Verwendung an einem entsprechenden Fahrzeug. Eine Anpassbarkeit an unterschiedliche Fahrzeug- und Einbausituationen ist somit nicht möglich.

Es ist Aufgabe der vorliegenden Erfindung, die voranstehend beschriebenen Nachteile zumindest teilweise zu beheben. Insbesondere ist es Aufgabe der vorliegenden Erfindung, den Antrieb der Kameraeinheit räumlich flexibel zur Kameraeinheit anzuordnen, so dass der Antrieb innerhalb eines Gehäuses des Bilderfassungssystems oder auch außerhalb angeordnet werden kann.

Voranstehende Aufgabe wird gelöst durch ein Bilderfassungssystem mit den Merkmalen des Anspruchs 1. Weitere Merkmale und Details der Erfindung ergeben sich aus den Unteransprüchen, der Beschreibung und den Zeichnungen.

Erfindungsgemäß weist das Bilderfassungssystem mit einer Kameraeinheit zur Bilderfassung des Außenbereichs eines Kraftfahrzeuges zumindest ein Schutzelement auf, wobei zumindest die Kameraeinheit und/oder das Schutzelement über einen Mechanismus mittels eines Antriebs von zumindest einer Schließstellung in zumindest eine Offenstellung bewegbar ist, wobei sich in der Schließstellung das Schutzelement zumindest eine Linse der Kameraeinheit von außen unzugänglich hinter dem Schutzelement befindet und in der Offenstellung zumindest die Linse der Kameraeinheit durch das Schutzelement zur Bilderfassung freigegeben ist. Weiter ist zumindest ein als Umlenkrolle ausgebildetes Umlenkelement an dem Mechanismus angeordnet, das zur Richtungsänderung der an dem Mechanismus anliegenden Kraft dient, wodurch ein kompakter Bauraum realisiert ist. Dadurch ergibt sich der Vorteil, dass der Antrieb räumlich flexibel zur Kameraeinheit angeordnet werden kann. Diesbezüglich ist es vorstellbar, dass der Antrieb innerhalb des Gehäuses der Kameraeinheit oder auch außerhalb eines Gehäuses der Kameraeinheit und damit an einem beliebigen Ort am Fahrzeug angeordnet werden kann. Realisiert wird dies durch die mechanische Verbindung zwischen dem Antrieb und der Kameraeinheit, die über das Umlenkelement die zu übertragende Kraft auch bei einer Richtungsänderung überträgt. Aufgrund des gemeinsamen Mechanismus für die Kameraeinheit und das Schutzelement, muss das Schutzelement nicht durch die Kamera selbst aufgestoßen werden, wodurch mechanische Belastungen an den beteiligten Bauteilen vermindert werden. Es ist darüber hinaus auch denkbar, dass das Schutzelement derart gelagert ist, dass dieses unabhängig von der Kameraeinheit geöffnet bzw. geschlossen werden kann ohne dass die Kamera in die Schließ- bzw. Offenstellung gebracht wird. Dadurch wird ermöglicht, dass die zumindest eine Linse der Kameraeinheit von außen einfach zugänglich ist. Das Schutzelement kann über eine translatorische und/oder eine rotatorische Bewegung von der Offenstellung in die Schließstellung und umgekehrt bewegt werden. Zu diesem Zweck kann das Schutzelement durch eine Rückstellfeder beaufschlagt sein, um das Schutzelement selbständig in die Schließstellung zu überführen.

Ein entscheidender Kerngedanke der vorliegenden Erfindung ist die flexible räumliche Anordnung des Antriebs für die Kameraeinheit innerhalb des Fahrzeugs, wodurch die Variabilität bei der Bauraumgestaltung sowie der benötigte Bauraum optimiert wird, da die Kraftübertragung durch das Umlenkelement in seiner Richtung verändert werden kann, so dass der Antrieb deutlich beabstandet bzw. an einer schwer zugänglichen Stelle (am Fahrzeug) angeordnet werden kann. Die realisierte Richtungsänderung der anliegenden Kraft ermöglicht es den Antrieb auch winkelversetzt zur Kameraeinheit anzuordnen.

Ein besonderer Vorteil ergibt sich dadurch, dass die Umlenkrolle beweglich gelagert und um eine Rotationsachse drehbar ist. Eine erfindungsgemäße Umlenkrolle kann dabei eine voll- oder teilkreisförmige Rolle sein, die sowohl starr als auch beweglich um eine Rotationsachse gelagert ist. Eine zumindest teilkreisförmige Umlenkrolle oder vollständige Umlenkrolle ermöglicht eine reibungsarme und somit eine verschleissarme Kraftübertragung, wobei insbesondere bei einer drehbar gelagerten Umlenkrolle die Kraftverluste infolge von Reibung deutlich verringert werden. Die Umlenkrolle kann dabei als ein Vollzylinder- oder ein Hohlzylinder mit einer Verbindung des Zylindermantels mit der Drehachse bzw. des Lagers sein. Darüber hinaus kann ein Hohlzylinder auch Verstärkungsrippen aufweisen, die auftretende mechanische Belastungen aufnehmen können. Auch ist es denkbar, dass die Umlenkrolle zumindest einen Steg an ihrer Randfläche aufweist, so dass sich entlang der Lauffläche eine Steigung ergibt. Vorteilhafterweise besitzt die Umlenkrolle einen zweiten Steg entlang der Lauffläche, so dass zwischen den beiden Stegen eine gekrümmte U-förmige Lauffläche entsteht.

Ein wesentliches Merkmal einer erfindungsgemäßen Umlenkrolle ist dadurch charakterisiert, dass diese als eine Art Kraftwandler dient, die möglichst reibungsarm auf einer Achse gelagert ist und eine Richtungsänderung des Kraftvektors, ohne Änderung des Kraftbetrages bewirkt.

Ebenfalls ist es denkbar, dass das Umlenkelement bzw. die Umlenkrolle exzentrisch zur ihrer Drehachse gelagert ist, wodurch sich das Kraftverhältnis zum Verstellen weiter beeinflussen lässt.

Im Rahmen der Erfindung ist es denkbar, dass die Kameraeinheit über einen Kameraschlitten zwischen der Offenstellung und der Schließstellung stufenlos bewegbar ist. Dies hat zum Vorteil, dass im eingebauten Zustand das Bilderfassungssystem bündig mit der Fahrzeugkarosserie abschließen kann, ohne dass die Kamera aus dem Bilderfassungssystem herausragt. Daraus ergibt sich außerdem ein deutlich erhöhter Schutz vor Umwelteinflüssen, Vandalismus und Diebstahl, da die Kameraeinheit in einem Teil der Fahrzeugkarosserie versenkt werden kann. Die Bewegung der Kameraeinheit über einen erfindungsgemäßen Kameraschlitten ermöglicht einen Stellungswechsel der Kameraeinheit von einer Ruhestellung in eine Bilderfassungsstellung, bei der die zumindest eine Linse zur Bilderfassung des Außenbereiches des Kraftfahrzeuges freigegeben ist. Vorteilhafterweise kann die Kamera am Kameraschlitten über mindestens ein Gelenk oder Gelenkmechanismus bzw. Führungsmechanismus verbunden werden, so dass neben einer horizontalen Bewegung auch eine vertikale oder kombinierte Bewegung der Kameraeinheit ermöglicht ist.

Des Weiteren ist es denkbar, dass zumindest ein Übertragungselement mit seinem einen Ende an dem Kameraschlitten und/oder dem Schutzelement angeordnet ist, insbesondere das Übertragungselement mit seinem einen Ende an dem Kameraschlitten und/oder dem Schutzelement, insbesondere an einem Anschlusselement des Kameraschlittens und/oder des Schutzelementes, befestigt ist. Das Übertragungsmittel dient der flexiblen Kraftübertragung des Antriebs über das Umlenkelement auf den Kameraschlitten bzw. das Schutzelement, so dass der Kameraschlitten und/oder das Schutzelement von einer Schließstellung in zumindest eine Offenstellung bzw. von einer Ruhestellung in eine Aufzeichnungsstellung bewegt werden kann. Dementsprechend ist das eine Ende des Übertragungselementes an dem Antrieb befestigt und das andere Ende des Übertragungselementes an dem Kameraschlitten und/oder dem Schutzelement. Besonders bevorzugt ist dabei die Befestigung des Übertragungselementes mit seinem einen Ende an einem Anschlusselement des Kameraschlittens und/oder des Schutzelementes, wobei das Anschlusselement einteilig mit dem Kameraschlitten bzw. dem Schutzelement ausgebildet sein kann. Die Verbindung des Anschlusselementes zum Kameraschlitten bzw. zum Schutzelement kann hierbei durch eine Hakenverbindung, eine Klebeverbindung, eine Schraubverbindung, eine Klemmverbindung oder durch Vergießen hergestellt sein. Eine Hakenverbindung sowie eine Schraubverbindung und eine Klemmverbindung haben dabei den Vorteil, dass diese reversibel und somit austauschbar im Falle eines Defektes sind. Das Vergießen des Übertragungselementes sowie ein Verkleben stellt eine dauerhafte und vor Umwelteinflüssen geschützte Verbindungstechnik dar. Darüber hinaus werden bei derartigen Verbindungen keine weiteren Bauteile benötigt, die weitere Kosten verursachen und verschleißen können.

Vorteilhafterweise ist das Übertragungselement flexibel ausgebildet, insbesondere ein flexibles Zugmittel. Unter einem flexiblen Übertragungselement kann dabei ein Seil, ein Draht, eine Kette, ein Riemen, ein Band oder eine Gelenkstange verstanden werden. Besonders vorteilhaft ist es jedoch, wenn das Übertragungselement ein flexibles Zugmittel ist, das flexibel und bauraumtechnisch günstig angeordnet werden kann. Hierbei kann es sich bspw. um einen Bowdenzug handeln, der neben einer nahezu verlustfreien Kraftübertragung auch besonders verschleißfest ist. Ein solcher Bowdenzug besteht üblicherweise aus einem Metalldraht oder einem Drahtseil, so dass Kräfte auch entlang von Biegungen übertragen werden können.

Erfindungsgemäß ist es denkbar, dass das Zugsystem ein gedichtetes Zugsystem ist, insbesondere mindestens eine gekapselte Zughülle, mindestens ein flexibles Zugmittel, insbesondere mit einer gleitfähigen Beschichtung, wie z. B. einer PTFE- (PTFE-Polytetrafluorethen) oder einer Graphit-Beschichtung , mindestens eine Anschlagshülse sowie mindestens einen Liner, indem ein flexibles Zugmittel anordbar ist, aufweist. Die Zughülle wirkt dabei als mechanische Führung für das flexible Zugmittel und als Gegenlager für die übertragenen Zugkräfte, so dass das flexible Zugmittel Kräfte auch entlang von Biegungen übertragen kann. Die gleitfähige Beschichtung des flexiblen Zugmittels verringert die Reibung des Zugmittels bei einer Bewegung innerhalb der Zughülle bzw. innerhalb des Liners und bewirkt somit eine hohe Haltbarkeit und einen Schutz vor Umwelteinflüssen, insbesondere Schmutz und Feuchtigkeit. Des Weiteren besteht durch eine Beschichtung sowie eine gekapselte Zughülle ein Vorteil gegenüber herkömmlichen galvanisierten sowie Stainless-Steel-Zügen aufgrund der geringeren Reibung und dem zusätzlichen Schutz vor Feuchtigkeit. Das Zugsystem ist dabei derart ausgestaltet, dass zumindest die gekapselte Zughülle mit einer Anschlagshülse von dem Antrieb bis zu einem Gehäuse des Bilderfassungssystems ragt, so dass innerhalb des Gehäuses des Bilderfassungssystems lediglich das flexible Zugmittel mit einer gleitfähigen Beschichtung entlang des Umlenkelementes verläuft. Somit wird eine größtmögliche Flexibilität des Zugmittels innerhalb des Gehäuses des Bilderfassungssystems gewährleistet, so dass je nach Biegeradius entlang des Umlenkelementes die Zugkraft optimal übertragen werden kann.

Idealerweise weist das Umlenkelement oder die Umlenkrolle einen Minimalradius (Führungsradius gemessen von der Dreh- bzw. Rotationsachse bis zur Anlage des Zugmittels an das Umlenkelement oder die Umlenkrolle) vom 3-fachen bis 30-fachen, insbesondere vom 5-fachen bis 20-fachen, besonders bevorzugt vom 8-fachen bis 15-fachen, der Querschnittsdicke des Übertragungselementes, insbesondere des Zugmittels (ohne Zughülle), auf, um eine reibungsarme und verschleißfreie Kraftübertragung zu ermöglichen.

Des Weiteren ist es denkbar, dass die Kameraeinheit, insbesondere der Kameraschlitten, in eine Wartungsstellung bringbar ist, die nicht der Offenstellung und/oder der Schließstellung entspricht. Eine Wartungsstellung ermöglicht dabei einen erleichterten Zugriff der Kameraeinheit, so dass im Reparatur- oder Reinigungsfall lediglich die Kameraeinheit zugänglich gemacht wird ohne das komplette Bilderfassungssystem aus dem Fahrzeug ausbauen zu müssen. Dementsprechend ist es auch denkbar, dass die Kameraeinheit bei einem Defekt einfach ausgetauscht werden kann oder von außen Schmutz oder andere Fremdkörper von der Kameraeinheit bzw. der zumindest einen Kameralinse befreit werden kann.

Vorteilhaft ist es ebenfalls, wenn das Schutzelement einteilig oder mehrteilig als Verschluss für einen Öffnungsbereich des Bilderfassungssystems, insbesondere des Kameraschlittens, ausgestaltet ist, wobei das Schutzelement insbesondere als ein Lamellen- oder Zentralverschluss oder Rolladenverschluss oder Blendenverschluss gestaltbar ist. Ein einteiliges Schutzelement hat dabei den Vorteil, dass dies kostengünstig und einfach herstellbar ist, wobei es sich um ein Spritzgussteil aus Kunststoff oder ein Metallteil handeln kann. Ein mehrteiliges Schutzelement bietet dem gegenüber den Vorteil dieses flexibler zu gestalten, so dass mehrere Teile gelenkig untereinander verbunden sind, so dass diese bewegbar z. B. entlang einer Biegung oder Kante aufrollbar sind. Dementsprechend können die Teile des Schutzelementes innerhalb des Gehäuses bzw. der Fahrzeugkarosserie in der Offenstellung angeordnet werden.

Ein erfindungsgemäßes Bilderfassungssystem lässt sich dahingehend weiterbilden, dass eine Reinigungsanlage an dem Bilderfassungssystem anordbar ist, die über das Übertragungselement bewegbar ist. Dabei ermöglicht die Reinigungsanlage die Kamera bzw. die Kameralinse von Schmutz und anderen Fremdkörpern zu befreien, so dass eine freie Sicht zur Bilderfassung des Außenbereichs ermöglicht wird. Dies erhöht die Funktionssicherheit des Bilderfassungssystems und ermöglicht den Einsatz auch bei schlechten Wetterbedingungen. Hierbei ist es auch denkbar, dass über die Reinigungsanlage Mittel zur Pflege bzw. frostunempfindliche Mittel zur Reinigung der Kameraeinheit eingesetzt werden. Auch der Einsatz von Antibeschlagsmitteln für die Kameralinse ist hierbei denkbar.

Erfindungsgemäß ist es darüber hinaus denkbar, dass der Mechanismus mit dem Umlenkelement sowohl zur Bewegung des Schutzelementes, des Kameraschlittens und der Reinigungsanlage dient. Hierzu kann der Mechanismus mit einer Mehrzahl an Übertragungs-und Umlenkelementen ausgestattet werden, so dass bei kompakter Bauweise die Bewegung des Schutzelementes, des Kameraschlittens und der Reinigungsanlage realisiert werden kann.

Im Rahmen der Erfindung kann die Offenstellung und/oder die Schließstellung und/oder die Wartungsstellung durch einen Endlagenschalter und/oder einen mechanischen Anschlag feststellbar sein. Somit kann ein Defekt der Kameraeinheit, insbesondere der Anschlüsse und Kabel sowie des Antriebes verhindert werden. Dabei wird verhindert, dass die Anschlüsse und Kabel innerhalb des Bilderfassungssystems nicht eingeklemmt werden, so dass Brüche und/oder Risse weitestgehend verhindert werden. Darüber hinaus kann der Antrieb bei Erreichen des Endlagenschalters und/oder des mechanischen Anschlags ausgeschaltet werden, so dass unnötige Belastungen, die zum Defekt des Antriebs führen können, verhindert werden. Weiterhin kann über einen erfindungsgemäßen Endlagenschalter ein Signal übertragen werden, wodurch die Position der Kameraeinheit festgestellt werden kann und an ein entsprechendes Anzeigemittel übertragen werden, wo das Signal ausgewertet und damit die Position angezeigt wird.

Des Weiteren ist es denkbar, dass an der Kameraeinheit und/oder dem Kameraschlitten und/oder dem Schutzelement und/oder der Reinigungsanlage ein zweites Übertragungselement anordbar ist, wodurch eine Antriebskraft in eine zweite Bewegungsrichtung übertragbar ist. Hierdurch kann realisiert werden, dass durch einen weiteren Antrieb oder den bisher bekannten Antrieb für beide Bewegungsrichtungen, d. h. von der Ruhestellung in die Aufzeichnungsstellung bzw. von der Offenstellung in die Schließstellung bzw. eine Wartungsstellung auch in die Umkehrrichtung bewegt werden kann.

Im Rahmen der Erfindung kann die Kameraeinheit und/oder der Kameraschlitten und/oder das Schutzelement und/oder die Reinigungsanlage federbelastet sein. Dadurch wird ermöglicht, dass bei einer Zugvorrichtung, die eine Kraftübertragung lediglich in eine Richtung ermöglicht, die Umkehrrichtung der Bewegung durch eine federbelastete Befestigung hergestellt werden kann. Dies erspart einen weiteren Antrieb, der die jeweilige Umkehrrichtung umsetzen müsste. Dadurch kann der Bauraum weiter komprimiert werden, wobei gleichzeitig die Ausfallsicherheit erhöht wird, da es sich um eine rein mechanische Verbindung handelt, die nicht von einem weiteren Antrieb abhängig ist. Darüber hinaus handelt es sich hierbei um eine kostengünstige Ausführungsform.

Es ist des Weiteren denkbar, dass die Kameraeinheit und/oder der Kameraschlitten und/oder das Schutzelement und/oder die Reinigungsanlage durch einen Energiespeicher in die Offenstellung und/oder die Schließstellung und/oder die Wartungsstellung bringbar ist. Erfindungsgemäß ist es insbesondere denkbar, dass es sich um einen Energiespeicher handelt, der die kinetische Energie temporär speichert und im Bedarfsfall für eine entsprechende Bewegung wieder zur Nutzung freigibt. Auch hierdurch kann ein weiterer Antrieb für die Übertragung der Kraft entgegen der Zugrichtung, eingespart werden, so dass hierdurch der Bauraum und die Herstellungskosten weiter reduziert werden können.

Vorteilhaft kann der Antrieb eine Selbsthemmung aufweisen, so dass der Antrieb nicht bestromt werden muss, um eine stationäre Stellung zu halten. Dies ermöglicht zum einen die benötigte Energie für den Antrieb zu minimieren und dass durch einfache mechanische Konstruktion eine gewünschte Position gehalten werden kann. Dabei kann die Selbsthemmung z. B. durch einen entsprechenden Neigungswinkel, eine entsprechende Oberflächenrauigkeit der Auflagenfläche, die Werkstoffpaarung, die Gleitgeschwindigkeit, durch einen geeigneten Schmierstoff und durch Erwärmung beeinflusst werden. Bevorzugt kann es sich dabei um Getriebe handeln, wobei der Effekt durch eine hohe Übersetzung und Trägheitsmomente bzw. kleine Wirkungsgrade erreicht wird. Vorzugweise handelt es sich dabei um Schneckengetriebe, die die benötigten Anforderungen erfüllen, wenn der Steigungswinkel kleiner ist als der wirksame Winkel des Reibkegels.

Weitere, die Erfindung verbessernde Maßnahmen ergeben sich aus der nachfolgenden Beschreibung zu einigen Ausführungsbeispielen der Erfindung, welche in den Figuren dargestellt sind. Es zeigen jeweils schematisch:
- Fig.1A: das Bilderfassungssystem in einer Frontansicht,
- Fig.1B: das Bilderfassungssystem in der Schließstellung la,
- Fig.1C: das Bilderfassungssystem in der Schließstellung la
- Fig.2A: das Bilderfassungssystem in der Wartungsstellung lila,
- Fig.2B: das Bilderfassungssystem in der Wartungsstellung lila,
- Fig.3A: das Bilderfassungssystem in der Offenstellung IIa,
- Fig.3B: das Bilderfassungssystem in der Offenstellung IIa,

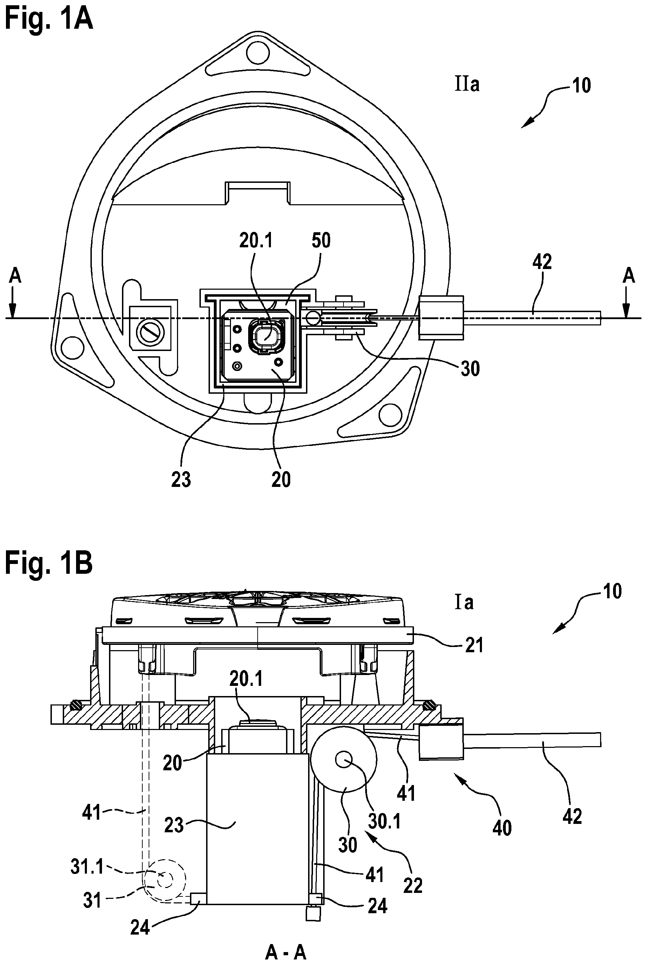

Elemente mit gleicher Funktion und Wirkungsweise sind in den Fig. 1A bis 3B jeweils mit denselben Bezugszeichen versehen.

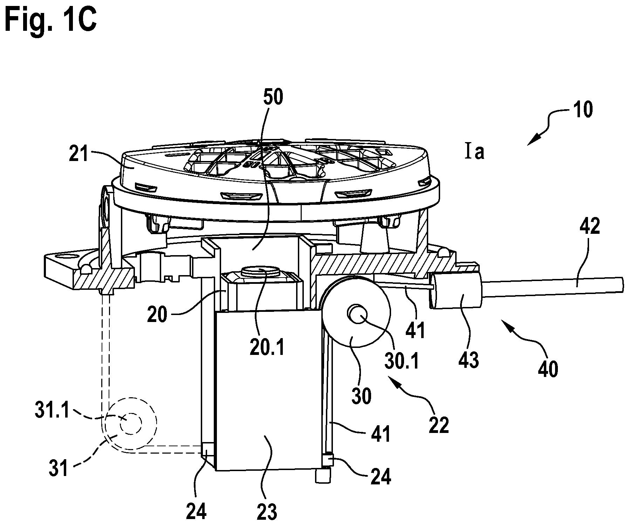

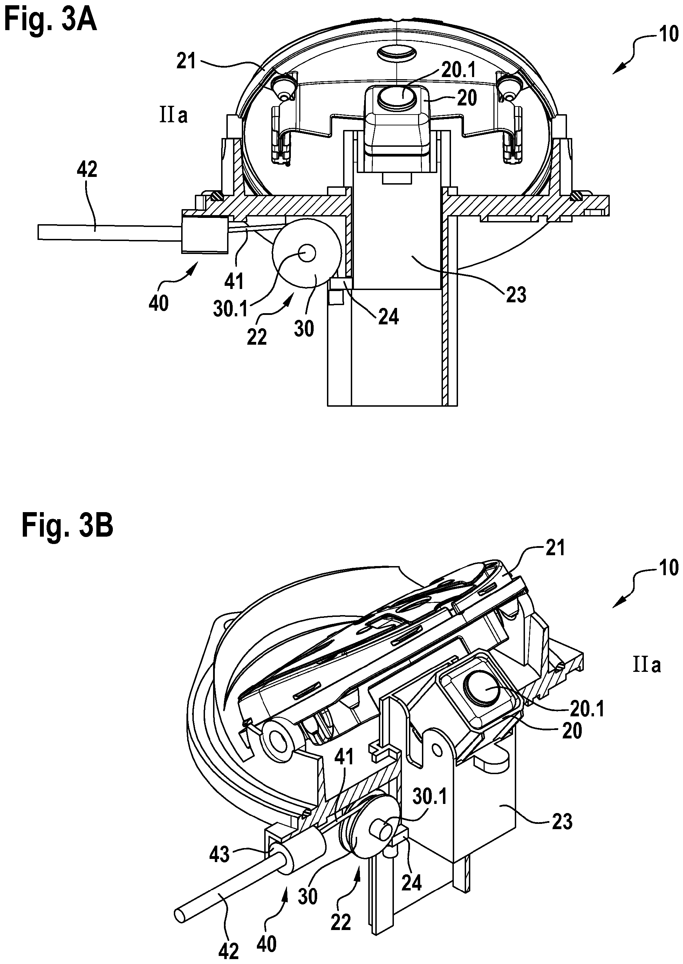

Die Figur 1 zeigt ein erfindungsgemäßes Bilderfassungssystem in der Offenstellung IIa,mit einer Kameraeinheit 20, welche eine Linse 20.1 aufweist. Die Kameraeinheit 20 ist hierbei derart in einem Kameraschlitten 23 angeordnet, dass die Linse 20.1 durch den Öffnungsbereich 50 einen Außenbereich eines Kraftfahrzeuges erfassen kann. Darüber hinaus ist das Umlenkelement 30 des Mechanismus 22 zu erkennen, welcher in Wirkverbindung mit dem Kameraschlitten 23 steht, sodass dieser zur Richtungsänderung einer an dem Umlenkelement 30 bzw. dem Mechanismus 22 anliegende Kraft von einem Antrieb 60 (s. Fig. 3B) dazu dient, die Kameraeinheit 20 bzw. den Kameraschlitten 23 zu bewegen. Die Figur 1 zeigt hierbei das Bilderfassungssystem 10 (ohne Antrieb 60) in einer Frontansicht.

Die Figur 1B zeigt das erfindungsgemäße Bilderfassungssystem 10 mit einer Kameraeinheit 20 in der Schließstellung la, wobei sich die Linse 20.1 hinter dem Schutzelement 21 von außen unzugänglich befindet. Weiterhin ist der Mechanismus 22 zu erkennen, wobei das Umlenkelement 30 hierbei als eine Umlenkrolle 30 mit einer Rotationsachse 30.1 ausgebildet ist und in Wirkverbindung mit dem Zugmittel 41 als Übertragungselement 40 steht. Das Zugmittel 41 des Übertragungselementes 40 wird dabei durch die Umlenkrolle 30 umgelenkt und ist an dem Anschlusselement 24 des Kameraschlittens 23 befestigt. Das Zugmittel 41, welches an seinem einen Ende an dem Anschlusselement 24 befestigt ist, wird mit seinen anderen Ende durch die gekapselte Zughülle 42 geführt, welche durch die Anschlagshülse 43 an dem Bilderfassungssystem 10 abgestützt ist. Darüber hinaus weist der Kameraschlitten 23 ein weiteres Anschlagselement 24 auf, an dem in Figur 1B in gestrichelter Form eine zweite Umlenkrolle 31 mit einer zweiten Rotationsachse 31.1 gezeigt ist. Die zweite Umlenkrolle 31 ist dabei derart angeordnet, dass sich bei einer Bewegung des Kameraschlittens 23 von der Schließstellung la in die Offenstellung IIa über das Zugmittel 41 das Schutzelement 21 von der Schließstellung la in die Offenstellung IIa bewegt wird. Dementsprechend kann bei einer Krafteinleitung über das Zugmittel 41 bzw. das Umlenkelement 30, gleichzeitig bei Verschieben des Kameraschlittens 23 in die Offenstellung, das Schutzelement 21 durch das zweite Zugmittel 41 und über die zweite Umlenkrolle 31, dieses in die Offenstellung IIa bewegt werden.

Hierbei weist das Umlenkelement 30 oder die Umlenkrolle 30 einen Minimalradius (Führungsradius gemessen von der Dreh- bzw. Rotationsachse 30.1 bis zur Anlage des Zugmittels an das Umlenkelement 30 oder die Umlenkrolle) vom 3-fachen bis 30-fachen, insbesondere vom 5-fachen bis 20-fachen besonders, bevorzugt vom 8-fachen bis 15-fachen, der Querschnittsdicke des Übertragungselementes 40, insbesondere des Zugmittels 41 (ohne Zughülle 42), auf, um eine reibungsarme und verschleißfreie Kraftübertragung zu ermöglichen.

Die Figur 1C zeigt ähnlich wie die Figur 1B das erfindungsgemäße Bilderfassungssystem 10 in der Schließstellung la, bei der die Kameraeinheit 20 mit der Linse 20.1 hinter dem Schutzelement 21 angeordnet ist. In Figur 1C ist zu erkennen, wie das Schutzelement 21 den Öffnungsbereich 50 der Linse 20.1 abdeckt, sodass die Linse 20.1 bzw. die Kameraeinheit 20 vor Umwelteinflüssen geschützt ist. Darüber hinaus ist der Mechanismus 22 mit den Umlenkrollen 30 sowie eine zweite Umlenkrolle 31 mit den entsprechenden Achsen 30.1 und einen 31.1 zu erkennen. Analog zu Figur 1B wird auch in der Figur 1C durch eine Krafteinleitung über das Übertragungselement 40, sowohl die Kameraeinheit 20 als auch das Schutzelement 21 von einer Schließstellung in eine Offenstellung bewegt.

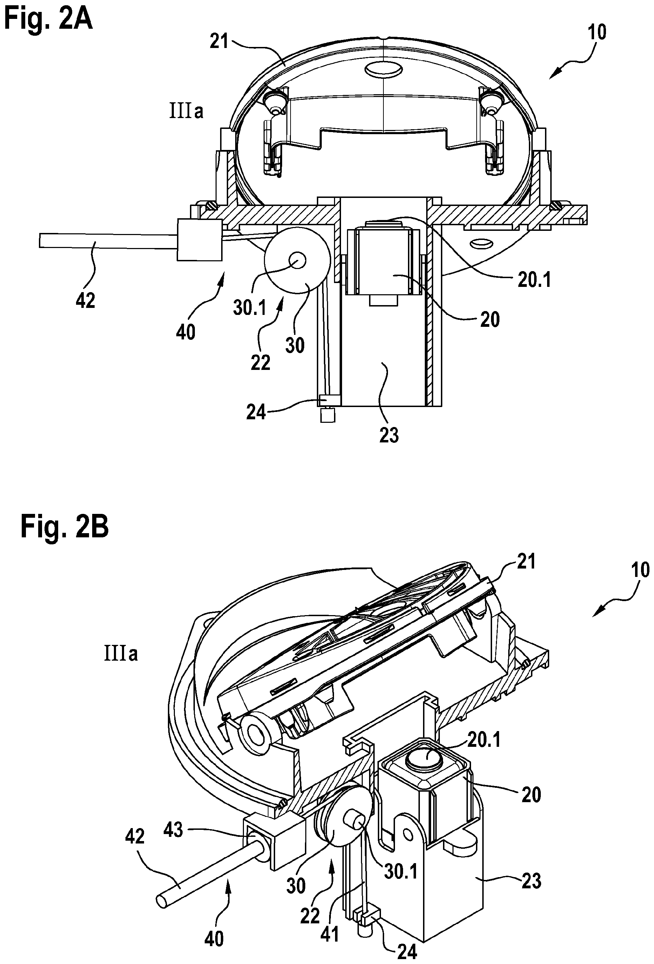

Die Figur 2A zeigt das Bilderfassungssystem 10 in der Wartungsstellung lila, die nicht der Offenstellung IIa oder der Schließstellung la entspricht. Die Wartungsstellung lila ermöglicht einen erleichterten Zugriff auf die Kameraeinheit 20 bzw. die Linse 20.1, sodass im Wartungsfall, Reparaturen oder Reinigungen erleichtert werden. In der Wartungsstellung lila befindet sich der Kameraschlitten 23 entfernt vom Öffnungsbereich 50. In der Wartungsstellung lila ist es ebenfalls denkbar, dass die Kameraeinheit 20 manuell aus dem Kameraschlitten 23 bewegt werden kann, sodass für Wartungs- oder Reparaturarbeiten die Kameraeinheit 20 aus dem Kameraschlitten 23 herausgefahren werden kann, ohne dass der Kameraschlitten 23 komplett in die Offenstellung la bewegt werden muss.

Auch die Figur 2B zeigt das Bilderfassungssystem 10 in der Wartungsstellung lila, wobei zu erkennen ist, dass die Kameraeinheit 20 zu einem großen Teil aus dem Kameraschlitten 23 herausbewegt ist, wobei sich der Kameraschlitten 23 in seiner Schließstellung befindet. Folglich ist ein guter Zugriff auf die Kameraeinheit 20 bzw. die Linse 20.1 gegeben, sodass die Kameraeinheit 20 ausgetauscht oder z. B. die Linse 20.1 gereinigt werden kann. In der Figur 2B ist das einteilig ausgebildete Schutzelement 21 um eine Rotationsachse in die Offenstellung verschwenkt, wobei sich der Teil des Schutzelementes 21, welcher sich oberhalb der Schwenkachse befindet, in ein Gehäuse des Bilderfassungssystem System 10 hineinschwenkt, sodass gleichzeitig der unterhalb der Schwenkachse gelegene Teil des Schutzelementes 21 aus dem Gehäuse des Bilderfassungssystem 10 hinaus geschwenkt wird. Das Übertragungsmittel 40, welches hier als ein flexibles Zugsystem 40 ausgebildet ist, weist eine gekapselte Zughülle 42, ein flexibles Zugelement 41 sowie eine Anschlagshülse 43 auf. Die Anschlagshülse 43 ist hierbei in einer Aufnahme an einem Gehäuse an der Anschlagshülse 43 ebenfalls weitestgehend abgekapselt von Umwelteinflüssen angeordnet. Durch die gekapselte Zughülle 42 und die Anschlagshülse 43 verläuft das flexible Zugmittel 41, welches durch die gekapselte Zughülle 42 vor Umwelteinflüssen geschützt wird, und erst innerhalb eines Gehäuses des Bilderfassungssystems aus der Zughülle 42 herausgeführt wird.

Die Figur 3A zeigt das Bilderfassungssystem 10 in der Offenstellung IIa, in der das kreisförmige Schutzelement 21 die Kameraeinheit 20 bzw. die Linse 20.1 zur Bilderfassung freigibt. Der Kameraschlitten 23 befindet sich dabei in einer Offenstellung IIa, in der der Kameraschlitten 23 aus seiner Aufnahme herausgefahren ist und die Kameraeinheit 20 bzw. die Linse 20.1 ebenfalls aus dem Kameraschlitten 23 und somit aus dem Bilderfassungssystem 10 herausragt. Wie an dem Mechanismus 22 zu erkennen ist, befindet sich nun das Anschlusselement 24 des Kameraschlittens 23 in der Nähe des Umlenkelementes 30, wodurch ersichtlich ist, dass der Kameraschlitten sich in einer Offenstellung befindet, und das Zugmittel 41 von einem Antrieb 60 derart mit einer Zugkraft beaufschlagt ist, dass ein Großteil des Zugmittels 41 sich außerhalb des Bilderfassungssystems 10 befindet.

Auch die Figur 3B zeigt das Bilderfassungssystem 10 in der Offenstellung IIa, wobei zu erkennen ist, wie das Schutzelement 21 in die Offenstellung verschwenkt ist und die Kameraeinheit 20 bzw. Linse 20.1 zur Bilderfassung eines Außenbereiches freigegeben ist. Ebenfalls zu erkennen ist wie die Kameraeinheit 20 um einen Drehpunkt aus dem Kameraschlitten 23 herausgeschwenkt ist, wodurch sich ein geeigneter Bilderfassungsbereich ergibt.

Zusätzlich ist in Figur 3B auch der Antrieb 60 mit einem Motor 61 schematisch dargestellt. Vom Antrieb 60 geht das flexible Zugmittel 40 zum Umlenkelement 30, um u. a. den Mechanismus 22 zu betätigen. Um das Drehmoment vom Motor 61 zu verändern, kann eine Selbsthemmung ggf. durch ein Getriebe im Antrieb 60 vorgesehen sein.

### Bezugszeichenliste

- 10: Bilderfassungssystem
- 20: Kameraeinheit
- 21: Schutzelement
- 22: Mechanismus
- 23: Kameraschlitten
- 30: Umlenkelement
- 30.1: Rotationsachse
- 31: Umlenkelement
- 31.1: Rotationsachse
- 40: Übertragungselement
- 41: Zugmittel
- 42: Zughülle
- 43: Anschlagshülse
- 50: Öffnungsbereich
- 60: Antrieb
- 61: Motor mit ggf. Selbsthemmung

- Ia: Schließstellung
- IIa: Offenstellung
- IIIa: Wartungsstellung

## Patentansprüche

1. Bilderfassungssystem (10) mit einer Kameraeinheit (20), die zur Bilderfassung des Außenbereiches eines Kraftfahrzeuges dient, und
einem Schutzelement (21), wobei zumindest die Kameraeinheit (20) und das Schutzelement (21) über einen Mechanismus (22) mittels eines Antriebs (60) von zumindest einer Schließstellung (Ia) in zumindest eine Offenstellung (IIa) bewegbar sind, wobei
sich in der Schließstellung (Ia) des Schutzelementes (21) zumindest eine Linse (20.1) der Kameraeinheit (20) von außen unzugänglich hinter dem Schutzelement (21) befindet, und
in der Offenstellung (IIa) zumindest die Linse (20.1) der Kameraeinheit (20) durch das Schutzelement (21) zur Bilderfassung freigegeben ist,
**dadurch gekennzeichnet,**
**dass** zumindest ein Umlenkelement (30, 31), das als Umlenkrolle (30,31) ausgebildet ist, an dem Mechanismus (22) angeordnet ist, das zur Richtungsänderung einer an dem Mechanismus (22) anliegenden Kraft dient, wodurch ein kompakter Bauraum realisiert ist.

2. Bilderfassungssystem (10) nach Anspruch 1,
**dadurch gekennzeichnet,**
**dass** die Umlenkrolle (30, 31) beweglich gelagert ist, und insbesondere um eine Rotationsachse (30.1, 31.1) drehbar ist.

3. Bilderfassungssystem (10) nach Anspruch 1 oder 2,
**dadurch gekennzeichnet,**
**dass** die Kameraeinheit (20) über einen Kameraschlitten (23) zwischen der Offenstellung (IIa) und der Schließstellung (Ia) stufenlos bewegbar ist.

4. Bilderfassungssystem (10) nach Anspruch einem der vorhergehenden Ansprüche,
**dadurch gekennzeichnet,**
**dass** zumindest ein Übertragungselement (40) mit seinem einen Ende an dem Kameraschlitten (23) und/oder dem Schutzelement (21) angeordnet ist, insbesondere an einem Anschlusselement (24) des Kameraschlittens (23) und/oder des Schutzelementes (21), befestigt ist.

5. Bilderfassungssystem (10) nach einem der vorhergehenden Ansprüche,
**dadurch gekennzeichnet,**
**dass** ein Übertragungselement (40) ein flexibles Zugsystem (40) ist, insbesondere dass das Zugsystem (40) ein gedichtetes Zugsystem (40) ist.

6. Bilderfassungssystem (10) nach einem der vorhergehenden Ansprüche,
**dadurch gekennzeichnet,**
**dass** die Kameraeinheit (20), insbesondere der Kameraschlitten (23), in eine Wartungsstellung (IIIa) bringbar ist, die nicht der Offenstellung (IIa) und/oder der Schließstellung (la) entspricht.

7. Bilderfassungssystem (10) nach einem der vorhergehenden Ansprüche,
**dadurch gekennzeichnet,**
**dass** das Schutzelement (21) einteilig oder mehrteilig als Verschluss für einen Öffnungsbereich (50) des Bilderfassungssystems (10), insbesondere des Kameraschlittens (23) ausgestaltet ist, wobei das Schutzelement (21) insbesondere als ein Lamellen- oder Zentralverschluss oder Rolladenverschluss oder Blendenverschluss gestaltbar ist.

8. Bilderfassungssystem (10) nach einem der vorhergehenden Ansprüche,
**dadurch gekennzeichnet,**
**dass** eine Reinigungsanlage an dem Bilderfassungssystem (10) anordbar ist, die durch ein Übertragungselement antreibbar ist.

9. Bilderfassungssystem (10) nach Anspruch 8,
**dadurch gekennzeichnet,**
**dass** der Mechanismus (22) sowohl zur Bewegung des Schutzelementes (21), des Kameraschlittens (23) und der Reinigungsanlage dient.

10. Bilderfassungssystem (10) nach einem der vorhergehenden Ansprüche,
**dadurch gekennzeichnet,**
**dass** die Offenstellung (IIa) und/oder die Schließstellung (Ia) und/oder die Wartungsstellung (IIIa, IIIb) durch einen Endlagenschalter und/oder einen mechanischen Anschlag feststellbar ist.

11. Bilderfassungssystem (10) nach einem der vorhergehenden Ansprüche,
**dadurch gekennzeichnet,**
**dass** an der Kameraeinheit (20) und/oder dem Kameraschlitten (23) und/oder dem Schutzelement (21) und/oder der Reinigungsanlage ein zweites Übertragungselement (31) anordbar ist, wodurch insbesondere eine Kraft in eine zweite Bewegungsrichtung übertragbar ist.

12. Bilderfassungssystem (10) nach einem Ansprüche 8 bis 11,
**dadurch gekennzeichnet,**
**dass** jeweils ein Umlenkelement (30, 31) für das Schutzelement (21), ein Umlenkelement (30, 31) für den Kameraschlitten (23) und ein Umlenkelement (30, 31) für die Reinigungsanlage vorsehbar ist.

13. Bilderfassungssystem (10) nach einem der vorhergehenden Ansprüche,
**dadurch gekennzeichnet,**
**dass** die Kameraeinheit (20) und/oder der Kameraschlitten (23) und/oder das Schutzelement (21) und/oder die Reinigungsanlage durch Rückstellfedern federbelastet sind.

14. Bilderfassungssystem (10) nach einem der vorhergehenden Ansprüche,
**dadurch gekennzeichnet,**
**dass** die Kameraeinheit (20) und/oder der Kameraschlitten (23) und/oder das Schutzelement (21) und/oder die Reinigungsanlage durch einen Energiespeicher in die Offenstellung (IIa) und/oder die Schließstellung (Ia) und/oder die Wartungsstellung (IIIa) bringbar ist.

15. Bilderfassungssystem (10) nach einem der vorhergehenden Ansprüche,
**dadurch gekennzeichnet,**
**dass** der Antrieb (60) eine Selbsthemmung aufweist, sodass der Antrieb (60) nicht bestromt werden muss, um eine stationäre Stellung zu halten.

## Claims

1. An image capturing system (10) with a camera unit (20) for capturing images of the outside area of a motor vehicle, and
a protective element (21), wherein at least the camera unit (20) and the protective element (21) can be moved via a mechanism (22) by means of a drive (60) from at least a closed position (Ia) into at least an open position (IIa), wherein
in the closed position (Ia) of the protective element (21) at least a lens (20.1) of the camera unit (20) is located behind the protective element (21) so as to be inaccessible from outside, and
in the open position (IIa) at least the lens (20.1) of the camera unit (20) is exposed for image capture by the protective element (21),
**characterised in that**
at least one deflective element (30, 31) is formed as a deflecting roller (30, 31) and arranged on the mechanism (22), which serves to change the direction of a force applied to the mechanism (22), thereby realising a compact installation space.

2. The image capturing system (10) according to claim 1,
**characterised in that**
the deflecting element (30, 31) movably mounted, and in particular is rotatable about a rotational axis (30.1, 31.1).

3. The image capturing system (10) according to claim 1 or 2,
**characterised in that**
the camera unit (20) is steplessly movable via a camera carriage (23) between the open position (IIa) and the closed position (Ia).

4. The image capturing system (10) according to one of the preceding claims,
**characterised in that**
at least one transfer element (40) is arranged with its one end on the camera carriage (23) and/or the protective element (21), in particular is attached to a connecting element (24) of the camera carriage (23) and/or the protective element (21).

5. The image capturing system (10) according to one of the preceding claims,
**characterised in that**
the transfer element (40) is configured so as to be flexible, in particular is a flexible cable pull system (41).

6. The image capturing system (10) according to one of the preceding claims,
**characterised in that**
the camera unit (20), in particular the camera carriage (23), can be brought into a maintenance position (IIIa) which does not correspond to the open position (IIa) and/or the closed position (Ia).

7. The image capturing system (10) according to one of the preceding claims,
**characterised in that**
the protective element (21) is realised as a one-piece or multi-piece shutter for an opening area (50) of the image capturing system (10), in particular of the camera carriage (23), wherein the protective element (21) can be designed, in particular, as a bladed shutter or central shutter or roller shutter or diaphragm shutter.

8. The image capturing system (10) according to one of the preceding claims,
**characterised in that**
a cleaning system can be arranged on the image capturing system (10), which can be driven by a transfer element.

9. The image capturing system (10) according to one of the preceding claims,
**characterised in that**
the mechanism (22) serves to move not only the protective element (21), but also the camera carriage (23) and the cleaning system.

10. The image capturing system (10) according to one of the preceding claims,
**characterised in that**
the open position (IIa) and/or the closed position (Ia) and/or the maintenance position (IIIa, IIIb) can be locked by an end position switch and/or a mechanical stop.

11. The image capturing system (10) according to one of the preceding claims,
**characterised in that**
that a second transfer element (31) can be arranged on the camera unit (20) and/or the camera carriage (23) and/or the protective element (21) and/or the cleaning system, thereby allowing, in particular, a force to be transferred into a second direction of movement.

12. The image capturing system (10) according to one of the preceding claims,
**characterised in that**
the protective element (21), the camera carriage (23) and the cleaning system can each be provided with a deflecting element (30, 31).

13. The image capturing system (10) according to one of the preceding claims,
**characterised in that**
the camera unit (20) and/or the camera carriage (23) and/or the protective element (21) and/or the cleaning system are spring-loaded by return springs.

14. The image capturing system (10) according to one of the preceding claims,
**characterised in that**
the camera unit (20) and/or the camera carriage (23) and/or the protective element (21) and/or the cleaning system can be brought into the open position (IIa) and/or the closed position (Ia) and/or the maintenance position (IIIa) by an energy store.

15. The image capturing system (10) according to one of the preceding claims,
**characterised in that**
the drive (60) can comprise a self-locking element, so that the drive (60) does not have to be energised in order to maintain a stationary position.

## Revendications

1. Système (10) de saisie d'images comprenant une unité à caméra (20) servant à la capture d'images de la région extérieure d'un véhicule automobile, et
un élément de protection (21), au moins ladite unité à caméra (20) et ledit élément de protection (21) pouvant être mus par l'intermédiaire d'un mécanisme (22), au moyen d'un entraînement (60), vers au moins une position d'ouverture (IIa) à partir d'au moins une position de fermeture (Ia), sachant que,
dans ladite position de fermeture (Ia) de l'élément de protection (21), au moins une lentille (20.1) de l'unité à caméra (20) se trouve derrière ledit élément de protection (21) avec inaccessibilité depuis l'extérieur, et que,
dans ladite position d'ouverture (IIa), au moins ladite lentille (20.1) de ladite unité à caméra (20) est dégagée par ledit élément de protection (21), en vue de la capture d'images,
**caractérisé par le fait**
**qu'**au moins un élément de renvoi (30, 31), réalisé sous la forme d'un galet de renvoi (30, 31), est disposé sur le mécanisme (22) et sert à modifier la direction d'une force appliquée audit mécanisme (22), permettant ainsi d'obtenir un encombrement ramassé.

2. Système (10) de saisie d'images, selon la revendication 1,
**caractérisé par le fait**
**que** le galet de renvoi (30, 31) est monté avec mobilité, et peut notamment tourner autour d'un axe de rotation (30.1, 31.1).

3. Système (10) de saisie d'images, selon la revendication 1 ou 2,
**caractérisé par le fait**
**que** l'unité à caméra (20) peut être mue en continu entre la position d'ouverture (IIa) et la position de fermeture (Ia), par l'intermédiaire d'une glissière (23) porte-caméra.

4. Système (10) de saisie d'images, selon l'une des revendications précédentes,
**caractérisé par le fait**
**qu'**au moins un élément de transmission (40) est disposé sur la glissière (23) porte-caméra et/ou sur l'élément de protection (21), par l'une de ses extrémités, et est notamment fixé à un élément de liaison (24) de ladite glissière (23) porte-caméra et/ou dudit élément de protection (21).

5. Système (10) de saisie d'images, selon l'une des revendications précédentes,
**caractérisé par le fait**
**qu'**un élément de transmission (40) se présente comme un système de traction (40) doué de flexibilité ; notamment par le fait que ledit système de traction (40) est un système de traction (40) dont l'étanchéité est assurée.

6. Système (10) de saisie d'images, selon l'une des revendications précédentes,
**caractérisé par le fait**
**que** l'unité à caméra (20), en particulier la glissière (23) porte-caméra, peut être amenée à une position de maintenance (IIIa) ne correspondant pas à la position d'ouverture (IIa) et/ou à la position de fermeture (Ia).

7. Système (10) de saisie d'images, selon l'une des revendications précédentes,
**caractérisé par le fait**
**que** l'élément de protection (21) est structuré en une partie ou en plusieurs parties, en tant qu'occultation dédiée à une zone d'ouverture (50) dudit système (10) de saisie d'images, en particulier de la glissière (23) porte-caméra, ledit élément de protection (21) pouvant notamment être conçu comme une occultation à lamelles ou une occultation centralisée, une occultation à volet roulant, ou une occultation à diaphragme.

8. Système (10) de saisie d'images, selon l'une des revendications précédentes,
**caractérisé par le fait**
**qu'**une installation de nettoyage, pouvant être entraînée par un élément de transmission, peut être disposée sur ledit système (10) de saisie d'images.

9. Système (10) de saisie d'images, selon la revendication 8,
**caractérisé par le fait**
**que** le mécanisme (22) sert à la mise en mouvement tant de l'élément de protection (21), que de la glissière (23) porte-caméra et de l'installation de nettoyage.

10. Système (10) de saisie d'images, selon l'une des revendications précédentes,
**caractérisé par le fait**
**que** la position d'ouverture (IIa) et/ou la position de fermeture (Ia) et/ou la position de maintenance (IIIa, IIIb) peu(ven)t être détectée(s) par l'intermédiaire d'un interrupteur de fin de course et/ou d'une butée mécanique.

11. Système (10) de saisie d'images, selon l'une des revendications précédentes,
**caractérisé par le fait**
**qu'**un second élément de transmission (31) peut être disposé sur l'unité à caméra (20) et/ou sur la glissière (23) porte-caméra et/ou sur l'élément de protection (21) et/ou sur l'installation de nettoyage, une force pouvant ainsi, en particulier, être transmise dans une seconde direction de mouvement.

12. Système (10) de saisie d'images, selon l'une des revendications 8 à 11,
**caractérisé par le fait**
**qu'**il est possible de prévoir, à chaque fois, un élément de renvoi (30, 31) dédié à l'élément de protection (21), un élément de renvoi (30, 31) dévolu à la glissière (23) porte-caméra et un élément de renvoi (30, 31) affecté à l'installation de nettoyage.

13. Système (10) de saisie d'images, selon l'une des revendications précédentes,
**caractérisé par le fait**
**que** l'unité à caméra (20) et/ou la glissière (23) porte-caméra et/ou l'élément de protection (21) et/ou l'installation de nettoyage est (sont) sollicité(e)(s) élastiquement par de ressorts de rappel.

14. Système (10) de saisie d'images, selon l'une des revendications précédentes,
**caractérisé par le fait**
**que** l'unité à caméra (20) et/ou la glissière (23) porte-caméra et/ou l'élément de protection (21) et/ou l'installation de nettoyage peu(ven)t être amené(e)(s), par l'intermédiaire d'un accumulateur d'énergie, à la position d'ouverture (IIa) et/ou à la position de fermeture (Ia) et/ou à la position de maintenance (IIIa).

15. Système (10) de saisie d'images, selon l'une des revendications précédentes,
**caractérisé par le fait**
**que** l'entraînement (60) est muni d'un autoblocage, de telle sorte que ledit entraînement (60) ne doive pas nécessairement être alimenté en courant pour conserver une position fixe.
